# EUROPEAN PATENT APPLICATION

(11) **EP 4 394 584 A1**
(43) Date of publication of application: **03.07.2024**
(21) Application number: 22874889.3
(22) Date of filing: 27.09.2022
(51) Int. Cl.: G06F 8/65

(54) **APPLICATION UPGRADING METHOD AND APPARATUS, NETWORK CARD, AND DEVICE**

(30) Priority: 29.09.2021 CN 202111155642
(71) Applicant: Huawei Technologies Co., Ltd., Shenzhen, Guangdong 518129 (CN)
(72) Inventor: JIA, Xuya, Shenzhen, Guangdong 518129 (CN); GE, Yi, Shenzhen, Guangdong 518129 (CN); ZHENG, Kai, Shenzhen, Guangdong 518129 (CN)
(74) Representative: MERH-IP Matias Erny Reichl Hoffmann Patentanwälte PartG mbB
(86) International application number: PCT/CN2022/121619
(87) International publication number: WO 2023/051504

(57) **Abstract**

Embodiments of this application disclose an application upgrade method. The method includes: obtaining upgrade information of an application, where the upgrade information includes a target operator, an operator identifier of the target operator, and an application identifier of the application; obtaining, based on a virtual address, a physical address allocated to the target operator, where the physical address is an address of storage space on a network interface card device; storing the target operator in the storage space corresponding to the physical address; and constructing a first mapping relationship based on the operator identifier, the application identifier, and the physical address, where the first mapping relationship is used as routing information of the target operator when the application is running. In this application, when an application is upgraded, the application on a network interface card can be upgraded without a need to restart the network interface card. This can reduce impact of the application upgrade on the network interface card on a service, accelerate application computing and transmission, and improve performance of an entire device.

## Description

This application claims priority to Chinese Patent Application No. 202111155642.5, filed with the China National Intellectual Property Administration on September 29, 2021 and entitled "APPLICATION UPGRADE METHOD AND APPARATUS, NETWORK INTERFACE CARD, AND DEVICE", which is incorporated herein by reference in its entirety.

### TECHNICAL FIELD

This application relates to the communication field, and more specifically, to an application upgrade method and apparatus, a network interface card, and a device.

### BACKGROUND

In the current era, there has been a transformation from computing-centric to data-centric. Many applications, such as a typical artificial intelligence application, rely on big data. In addition, when an amount of data becomes increasingly larger, a faster network is needed to transmit the data.

With rapid development of network technologies, data may be transmitted between different devices according to different network protocols. Correspondingly, there are increasingly more types of network interface cards for devices. In addition to a conventional Ethernet network interface card, a smart network interface card (which may be referred to as a network interface card or a network interface card device for short in this application) has emerged. Different devices configured with smart network interface cards may transmit a packet to each other according to a high-speed network transmission protocol, to improve a network transmission rate. To help an application better perform transmission communication and computing, and improve communication and computing performance of an entire device or an entire cluster, the smart network interface card may be used to offload communication and computing, that is, application-related computing on a host is offloaded to the smart network interface card for execution.

In some scenarios, an application offloaded to the smart network interface card needs to be upgraded. A conventional manner is to upgrade an application on the network interface card through cold upgrade. A basic process of cold upgrade is as follows: After obtaining a new application (or referred to as new firmware), a to-be-upgraded device (for example, a server/memory array) sends the new firmware to a network interface card in the device through a high-speed serial computer expansion bus standard (peripheral component interconnect express, PCIe) bus. The network interface card writes the new firmware to a read-only memory (read-only memory, ROM) (for example, a flash memory (flash)). Then, the network interface card is restarted and runs the new firmware in the ROM to boot, so that the new firmware takes effect. However, restarting the network interface card interrupts a service link, and consequently, a service is interrupted. In addition, on a device that does not support hot swap of a network interface card, in a process of updating an application on the network interface card, not only the network interface card needs to be restarted, but an entire device needs to be restarted. In this way, a new application can take effect.

Therefore, in a current method for upgrading an application on a network interface card, a service link is interrupted, and running of the service is affected.

### SUMMARY

An embodiment of this application provides an application upgrade method, so that an application on a network interface card can be upgraded without a need to restart the network interface card. This can reduce impact of the application upgrade on the network interface card on a service, accelerate application computing and transmission, and improve performance of an entire device.

According to a first aspect, this application provides an application upgrade method. The method is applied to a network interface card device. The method includes: obtaining upgrade information of an application, where the upgrade information includes a target operator, an operator identifier of the target operator, and an application identifier of the application; and obtaining a physical address allocated to the target operator, where the physical address is an address of storage space on the network interface card device.

In a possible implementation, a user may trigger an upgrade instruction for an application on a device in which a network interface card is located, so that the device in which the network interface card is located can generate upgrade information of the application. The upgrade information may be a microcode operator package obtained through cross compilation on upgrade content (for example, at least one operator), and the upgrade information is transferred to the network interface card device. The upgrade content may be an added operator, a replaced operator, or the like.

In a possible implementation, the target operator may be understood as code corresponding to a function. The function means a mapping rule from function space to function space. For example, the target operator may be a hash operation, a function interception operation, or the like.

In a possible implementation, the upgrade information may also be referred to as a microcode operator package or a microcode package.

In a possible implementation, the operator identifier of the target operator may be a function name or other information (for example, a character string) indicating the operator. The operator identifier may also be referred to as an operator ID, a microcode ID, or the like. The operator identifier may uniquely indicate the target operator.

In a possible implementation, the application identifier of the application may be an application name or other information (for example, a character string) indicating the application. The application identifier may also be referred to as an application ID. The application identifier may uniquely indicate the application.

In a possible implementation, the upgrade information further includes a virtual address corresponding to the target operator. The network interface card device may map the virtual address to a corresponding physical address based on the virtual address.

The virtual address may be an address (for example, an address in a dynamic random access memory (dynamic random access memory, DRAM)) allocated by a host to the target operator. To store the target operator in storage space on the network interface card device, the network interface card device needs to map the virtual address to a physical address of the storage space on the network interface card device.

In a possible implementation, the storage space is idle storage space on the network interface card device. Idle may be understood as that there is no data allocated to and stored in the storage space. In other words, the storage space may be idle storage space in a cache of the network interface card device, or the storage space may be idle storage space in a flash memory of the network interface card device.

The method further includes: storing the target operator in the storage space corresponding to the physical address, and constructing a first mapping relationship based on the operator identifier, the application identifier, and the physical address, where the first mapping relationship indicates that there is a mapping relationship between at least two of the operator identifier, the application identifier, and the physical address, and the first mapping relationship is used as routing information of the target operator when the application is running.

After the physical address corresponding to the target operator is determined, the target operator may be stored in the storage space corresponding to the physical address. For example, the target operator may be stored in storage space that is of a cache and that corresponds to the physical address, or stored in storage space that is of a flash memory and that corresponds to the physical address.

To enable the network interface card device to hook the target operator subsequently when the application is running, a mapping relationship table (which may be referred to as a microcode running management table or the first mapping relationship in embodiments of this application) used as the routing information of the target operator needs to be established. The first mapping relationship records an identifier, a physical address (or referred to as an interface address), and the like of each operator of the application. When the application is running, an identifier of an operator that needs to be hooked may be specified in a data packet, so that the network interface card device can determine, based on the identifier of the operator and the first mapping relationship, a physical address stored in the operator, and hook and execute the operator based on the physical address.

In an existing implementation, when an application on a network interface card is upgraded, to add an operator to code, the operator needs to be written at an insertion location of the operator. The entire application is affected when the operator is inserted (for example, when an operator A and an operator B are inserted, when the operator A is inserted but the operator B is not inserted, an error occurs in running of the application). Therefore, service communication of a web page needs to be disabled (that is, a data packet is not processed), the upgraded application that has been inserted with the operator is written to the network interface card, and the network interface card is restarted to take effect. However, in this embodiment, when an application is upgraded, the entire application is not replaced, only an upgraded operator is stored, and routing information is constructed for the upgraded operator. The target operator is not inserted into a location of the application, and a working process of other code of the application is not affected. When the application is running, only whether to hook the target operator needs to be specified in the data packet, a storage location of the target segment may be routed based on the first mapping relationship, and the target operator is hooked. In this way, the application on the network interface card can be upgraded without a need to restart the network interface card. Because the network interface card does not need to be restarted, a service link cannot be interrupted. Therefore, in the technical solutions provided in this embodiment, the application on the network interface card can be upgraded without interrupting a service communication link. This can reduce impact of upgrade of the application on the network interface card on a service, accelerate application computing and transmission, and improve performance of an entire device.

In addition, different application identifiers may be configured for different applications. Due to different application identifiers, isolation between the applications can be ensured (when data packets are processed, each data packet may hook an operator of an application of the data packet based on an indication of an operator identifier). In other words, a plurality of types of applications including a plurality of operators can be simultaneously offloaded and isolated from each other without affecting each other.

In a possible implementation, the storage space is a cache or a flash memory.

When the storage space is the flash memory, the operator is offloaded to a flash memory (flash) area of the network interface card without interrupting service traffic of the network interface card, so that online upgrade and selective management of a function of the network interface card can be implemented. In addition, after the network interface card is restarted, the operator may be loaded from the flash memory to an internal memory again for running.

In a possible implementation, the upgrade information further includes a first hook level of the target operator. The first hook level indicates an importance degree of the target operator. The storage space includes first subspace allocated to an operator of the first hook level. The physical address is an address of the first subspace.

The importance degree may be an operator function, an operator size, or an operator hook relationship. For example, the first hook level may indicate that the target operator may be hooked by an operator of a second hook level and that the target operator may hook an operator of a third hook level. The second hook level is different from the third hook level. In a possible implementation, the second hook level is lower than the first hook level, and the third hook level is higher than the first hook level. When a physical address is allocated to an operator, different areas are allocated to operators of different hook levels. An operator of a lower hook level can hook, based on hook level classification, an operator of a higher hook level. This can reduce a quantity of operators.

The network interface card device may pre-allocate different storage space (namely, the subspace described above) to operators of different importance degrees (for example, different functions or different sizes).

The storage space may include the first subspace allocated to the operator of the first hook level. The physical address is the address of the first subspace. The storage space may further include second subspace allocated to an operator of a second hook level. The first subspace is used to store the operator of the first hook level. The second subspace is used to store the operator of the second hook level.

In a possible implementation, the storage space is the first subspace that is on the network interface card device and that is allocated to the operator of the first hook level. The first subspace is used to store the operator of the first hook level.

When a physical address is allocated to an operator, different storage areas are allocated to operators of different hook levels. The first subspace is used to store the operator of the first hook level, but is not used to store an operator of another hook level.

In a possible implementation, the constructing a first mapping relationship based on the operator identifier, the application identifier, and the physical address includes: constructing the first mapping relationship based on the operator identifier, the first hook level, the application identifier, and the physical address. The first mapping relationship indicates that there is a mapping relationship between the operator identifier, the first hook level, the application identifier, and the physical address.

In a possible implementation, the second mapping relationship may record related information (for example, including an operator identifier, a virtual address, and an operator size) of a current operator that is of each application (including the application) and to which a physical address has been allocated.

In a possible implementation, an operator may be stored based on a hook level relationship of the operator. The hook level herein may be understood as a hook relationship between operators. An operator of a low hook level may hook an operator of a high hook level. Specifically, specific storage space may be allocated to each hook level, and an operator may be stored in storage space allocated to a hook level to which the operator belongs.

In a possible implementation, the second mapping relationship may include a plurality of hook levels, subspace allocated to each hook level, and information about an operator stored in each subspace. The information about the operator may include a virtual address of the operator and an identifier of the operator.

The second mapping relationship may record information about an allocated operator in storage space allocated to each hook level. In this way, when an address is allocated to the target operator, a hook level to which the target operator belongs may be first determined (for example, the target operator belongs to the first hook level).

In a possible implementation, the upgrade information further includes the first hook level of the target operator. In other words, a hook level of an operator may be included in the upgrade information.

After it is determined that the hook level to which the target operator belongs is the first hook level, space (the first subspace, where the first subspace is used to store the operator of the first hook level) allocated to the first hook level may be determined based on the second mapping relationship. In other words, the first subspace allocated to the first hook level is determined from the second mapping relationship based on the first hook level and the second mapping relationship, so that the physical address allocated to the target operator can be obtained from the first subspace.

It should be understood that the second mapping relationship may be stored in the cache or the flash memory.

It should be understood that the second mapping relationship may be stored as information in a form of, for example, a table or an array. A data form of the second mapping relationship is not limited herein.

In a possible implementation, the upgrade information may further include an identifier of a to-be-replaced operator. The obtaining a physical address allocated to the target operator includes: determining, based on the identifier of the to-be-replaced operator, a physical address of storage space in which the to-be-replaced operator is stored.

Upgrading the application may be replacing or adding an operator of the application. When the operator is replaced, the upgrade information may indicate to replace which operator (the to-be-replaced operator) and replace the operator with which operator (the target operator). In this way, the network interface card device can remove the to-be-replaced operator from an original storage location and store the target operator.

In a possible implementation, the target operator includes a first operator segment and a second operator segment. The first operator segment and the second operator segment each are a part of the target operator. The first operator segment includes an entry function of the target operator. The storing the target operator in the storage space corresponding to the physical address includes: on a basis that available space in the first subspace is smaller than storage space required for storing the target operator, and the available space in the first subspace is greater than storage space required for storing the first operator segment, storing the first operator segment in the storage space corresponding to the physical address, and transferring the second operator segment to a host, so that the host stores the second operator segment.

When the available storage space in the first subspace is insufficient to store the complete target operator and can store only a part of the target operator, only the part of the target operator may be stored in the first subspace. Then, a remaining part of the operator is stored in the host. The remaining part of the operator stored in the first subspace may include the entry function. In the foregoing manner, the storage space on the network interface card device can be fully utilized.

In a possible implementation, after the constructing a first mapping relationship, the method further includes: receiving operator hook information sent when the application is running, where the operator hook information includes the application identifier and the operator identifier, and the operator hook information indicates to execute the target operator; obtaining the physical address based on the operator hook information and the first mapping relationship; and obtaining the target operator based on the physical address.

When the upgraded application actually runs, if the application needs to hook the target operator, information (including the operator identifier and the application identifier) that indicates to hook the target operator may be transferred to the network interface card device. The network interface card device may obtain, based on the first mapping relationship, the physical address at which the target operator is stored, obtain the target operator from the physical address, and execute the target operator.

In a possible implementation, the operator hook information further indicates to execute a software program. The software program includes a first code segment, a second code segment, and a hook (hook) point located between the first code segment and the second code segment. The hook point indicates whether to hook the target operator. The operator hook information specifically indicates to hook the target operator after the first code segment is executed. The method further includes: executing the first code segment, the target operator, and the second code segment based on the operator hook information.

The operator hook information may indicate to run a program in the application. The program may be preconfigured with a hook point. Whether to hook the target operator may be indicated at the hook point. The application may transfer, to the network interface card device, information (which may be carried in a data packet or a QPC) about the target operator that needs to be hooked at the hook point, so that the network interface card device can hook and execute the target operator at the hook point when running the program.

According to a second aspect, this application provides an application upgrade apparatus. The apparatus is used in a network interface card device. The apparatus includes:
an obtaining module, configured to: obtain upgrade information of an application, where the upgrade information includes a target operator, an operator identifier of the target operator, and an application identifier of the application; and
obtain a physical address allocated to the target operator, where the physical address is an address of storage space on the network interface card device; and
an operator deployment module, configured to: store the target operator in the storage space corresponding to the physical address, and construct a first mapping relationship based on the operator identifier, the application identifier, and the physical address, where the first mapping relationship indicates that there is a mapping relationship between the operator identifier, the application identifier, and the physical address, and the first mapping relationship is used as routing information of the target operator when the application is running.

In a possible implementation, the storage space is a cache or a flash memory.

In a possible implementation, the upgrade information further includes a virtual address corresponding to the target operator.

The obtaining module is specifically configured to:
map the virtual address to a corresponding physical address based on the virtual address.

In a possible implementation, the upgrade information further includes a first hook level of the target operator. The first hook level indicates an importance degree of the target operator. The storage space includes first subspace allocated to an operator of the first hook level. The physical address is an address of the first subspace.

In a possible implementation, the storage space further includes second subspace allocated to an operator of a second hook level. The first subspace is used to store the operator of the first hook level. The second subspace is used to store the operator of the second hook level.

In a possible implementation, the obtaining module is specifically configured to:
obtain a second mapping relationship, where the second mapping relationship includes a plurality of hook levels and subspace allocated to each hook level;
determine, from the second mapping relationship based on the first hook level and the second mapping relationship, the first subspace allocated to the first hook level; and
obtain, from the first subspace, the physical address allocated to the target operator.

In a possible implementation, the upgrade information further includes an identifier of a to-be-replaced operator.

The obtaining module is specifically configured to:
determine, based on the identifier of the to-be-replaced operator, a physical address of storage space in which the to-be-replaced operator is stored.

In a possible implementation, the target operator includes a first operator segment and a second operator segment. The first operator segment and the second operator segment each are a part of the target operator. The first operator segment includes an entry function of the target operator.

The operator deployment module is specifically configured to:
on a basis that available space in the first subspace is smaller than storage space required for storing the target operator, and the available space in the first subspace is greater than storage space required for storing the first operator segment, store the first operator segment in the storage space corresponding to the physical address, and transfer the second operator segment to a host, so that the host stores the second operator segment.

In a possible implementation, the operator deployment module is specifically configured to:
construct the first mapping relationship based on the operator identifier, the first hook level, the application identifier, and the physical address, where the first mapping relationship indicates that there is a mapping relationship between the operator identifier, the first hook level, the application identifier, and the physical address.

In a possible implementation, the obtaining module is further configured to:
receive operator hook information sent when the application is running, where the operator hook information includes the application identifier and the operator identifier, and the operator hook information indicates to execute the target operator;
obtain the physical address based on the operator hook information and the first mapping relationship; and
obtain the target operator based on the physical address.

In a possible implementation, the operator hook information further indicates to execute a software program. The software program includes a first code segment, a second code segment, and a hook (hook) point located between the first code segment and the second code segment. The hook point indicates whether to hook the target operator. The operator hook information specifically indicates to hook the target operator after the first code segment is executed.

The apparatus further includes:
a program execution module, configured to execute the first code segment, the target operator, and the second code segment based on the operator hook information.

According to a third aspect, an embodiment of this application provides a computer-readable storage medium, including computer-readable instructions. When the computer-readable instructions are run on a computer device, the computer device is enabled to perform the method according to any one of the first aspect and the possible implementations of the first aspect.

According to a fourth aspect, an embodiment of this application provides a computer program product, including computer-readable instructions. When the computer-readable instructions are run on a computer device, the computer device is enabled to perform the method according to any one of the first aspect and the possible implementations of the first aspect.

According to a fifth aspect, this application provides a chip system. The chip system includes a processor. The processor is configured to support an execution device or a training device in implementing the functions in the foregoing aspects, for example, sending or processing the data or information in the foregoing method. In a possible design, the chip system further includes a memory. The memory is configured to store program instructions and data that are necessary for the execution device or the training device. The chip system may include a chip, or may include a chip and another discrete device.

According to a sixth aspect, a device is provided. The device includes a network interface card. The network interface card is configured to perform operational steps in the method according to any one of the first aspect or the possible implementations of the first aspect.

In this application, based on the implementations according to the foregoing aspects, the implementations may be further combined to provide more implementations.

An embodiment of this application provides an application upgrade method. The method is applied to a network interface card device. The method includes: obtaining upgrade information of an application, where the upgrade information includes a target operator, an operator identifier of the target operator, and an application identifier of the application; obtaining a physical address allocated to the target operator, where the physical address is an address of storage space on the network interface card device; and storing the target operator in the storage space corresponding to the physical address, and constructing a first mapping relationship based on the operator identifier, the application identifier, and the physical address, where the first mapping relationship indicates that there is a mapping relationship between the operator identifier, the application identifier, and the physical address, and the first mapping relationship is used as routing information of the target operator when the application is running.

When an application is upgraded, the entire application does not need to be replaced, only an upgraded operator is stored, and routing information is constructed for the upgraded operator. The application on the network interface card can be upgraded without a need to restart the network interface card. Because the network interface card does not need to be restarted, a service link cannot be interrupted. Therefore, in the technical solutions provided in this embodiment, the application on the network interface card can be upgraded without interrupting a service communication link. This can reduce impact of upgrade of the application on the network interface card on a service, accelerate application computing and transmission, and improve performance of an entire device.

### BRIEF DESCRIPTION OF DRAWINGS

FIG. 1 is a schematic diagram of an application architecture according to an embodiment of this application;
FIG. 2 is a schematic flowchart of an application upgrade method according to an embodiment of this application;
FIG. 3 is a schematic flowchart of an application upgrade method according to an embodiment of this application;
FIG. 4 is a schematic diagram of a loading management table according to an embodiment of this application;
FIG. 5 is a schematic diagram of a running management table according to an embodiment of this application;
FIG. 6 is a schematic flowchart of an application upgrade method according to an embodiment of this application;
FIG. 7 is a schematic diagram of an application architecture according to an embodiment of this application;
FIG. 8 is a schematic flowchart of an application upgrade method according to an embodiment of this application;
FIG. 9 is a schematic flowchart of an application upgrade method according to an embodiment of this application;
FIG. 10 is a schematic flowchart of an application upgrade method according to an embodiment of this application;
FIG. 11 is a schematic diagram of a structure of an application upgrade apparatus according to an embodiment of this application;
FIG. 12 is a schematic diagram of a structure of a network interface card according to an embodiment of this application; and
FIG. 13 is a schematic diagram of a structure of a device according to an embodiment of this application.

### DESCRIPTION OF EMBODIMENTS

The following describes embodiments of this application with reference to the accompanying drawings in embodiments of this application. Terms used in embodiments of this application are merely used to explain specific embodiments of this application, but are not intended to limit this application.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

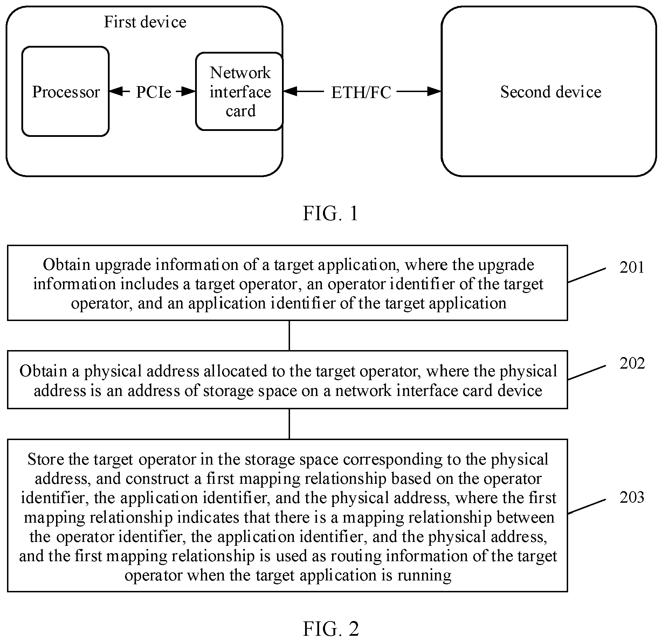

For ease of understanding of embodiments of this application, the following first describes a typical architecture for an application upgrade scenario of a network interface card with reference to FIG. 1.

As shown in FIG. 1, a first device includes a processor and a network interface card. The first device performs network communication with a second device by using the network interface card. The second device may be a remote network node. The network interface card is connected to the processor of the first device through a high-speed serial computer expansion bus standard (peripheral component interconnect express, PCIe) bus. The network interface card is connected to the second device through an Ethernet (Ethernet, ETH)/fiber channel (fiber channel, FC). It should be understood that the second device is also correspondingly disposed with a network interface card (not shown in FIG. 1).

Specifically, the first device may be a server or a memory array. The second device may also be a server or a memory array.

It should be understood that, the network interface card is an interface that connects a device (for example, the first device in FIG. 1) in which the network interface card with a to-be-upgraded application is located and a remote device (for example, the second device in FIG. 1) in a local area network. A transmission medium between the devices may be the ETH/FC in FIG. 1. This can not only implement a physical connection and electrical signal matching between the network interface card and the transmission medium in the local area network, but also relates to functions such as frame sending and receiving, frame encapsulation and decapsulation, media access control, data encoding and decoding, and data buffering.

It should be further understood that FIG. 1 is merely an example but not a limitation. During actual application, an architecture for an application upgrade scenario of a network interface card may alternatively be used for a scenario in which a plurality of hosts share a network interface card, that is, a plurality of hosts share one network interface card. Specifically, processors of a plurality of devices with to-be-upgraded applications each are connected to a same network interface card through a plurality of PCIe buses.

It should be noted that the host mentioned in this specification may correspond to the first device shown in FIG. 1. For example, in the scenario in which a plurality of hosts share one network interface card, a plurality of first devices shown in FIG. 1 are included, and the plurality of first devices share one network interface card. In other words, processors of the plurality of first devices each are connected to a same network interface card through PCIe buses.

It should be further noted that the processor shown in FIG. 1 is the processor of the first device, not a processor of the network interface card. A processor (or a processor unit) of a network interface card is involved in the following embodiments. For differentiation instead of limitation, in the following embodiments, a processor of a device in which a network interface card is located is denoted as a host processor. In other words, unless otherwise specified, a processor mentioned in the following embodiments except the host processor represents a processor (processor unit) of a network interface card.

In an existing application upgrade method, microcode on a network interface card needs to be recompiled based on an upgraded application. Then, a service of the network interface card is interrupted (that is, a network running program is interrupted), and the microcode firmware on the network interface card is replaced.

As described above, in the existing method for upgrading an application on the network interface card, the network interface card is restarted to run new firmware on the network interface card. However, as the network interface card is restarted, the network interface card is powered off. Consequently, a service link is interrupted. For example, when firmware on the network interface card is upgraded on a host that supports hot swap of the network interface card, the network interface card needs to be restarted to restore the service link. Restarting the network interface card generally takes tens of seconds. As a result, when the firmware on the network interface card is upgraded on the host that supports hot swap of the network interface card, the service link is interrupted for tens of seconds. For another example, when an application on the network interface card is upgraded on a host that does not support hot swap of the network interface card, both the network interface card and the host need to be restarted to restore the service link. Restarting the host generally takes several minutes. As a result, when the firmware on the network interface card is upgraded on the host that does not support hot swap of the network interface card, the service link is interrupted for several minutes. For a service with a high network requirement (for example, a device deployed with financial and medical applications), interruption of a service network connection for tens of seconds or even several minutes is unacceptable. In addition, in a scenario in which a plurality of hosts that do not support hot swap share one network interface card, the network interface card is restarted due to cold upgrade of the application. Consequently, the plurality of hosts are restarted, and there are high costs for recovery. In addition, because the network interface card is restarted, a network link between the network interface card and the remote device (for example, the second device in FIG. 1) is also interrupted. The link between the network interface card and the remote device needs to be reestablished, and the remote device also needs to be reconfigured. As a result, maintenance costs are also high.

In conclusion, the existing solution for upgrading an application on the network interface card has the following disadvantages: as the network interface card is powered off, a service link is interrupted, resulting in high network maintenance costs.

In view of the foregoing problems, embodiments of this application provide an application upgrade method and apparatus, a network interface card, and a device, so that a service link is not interrupted in a process of upgrading an application on the network interface card, and network maintenance costs can be reduced.

It should be understood that the network interface card includes a processor and a memory. The processor of the network interface card may be a central processing unit (central processing unit, CPU), or another microprocessor, or may be a field programmable gate array (field programmable gate array, FPGA). The memory of the network interface card includes a ROM (or a flash memory (flash)) and an internal memory. Specifically, the internal memory is a random access memory (random access memory, RAM). Generally, firmware on the network interface card is stored in the ROM. When the network interface card is working, the firmware in the ROM is loaded to a RAM area for execution.

The following describes embodiments of this application with reference to the accompanying drawings in embodiments of this application. Terms used in embodiments of this application are merely used to explain specific embodiments of this application, but are not intended to limit this application.

FIG. 2 is a schematic flowchart of an application upgrade method according to an embodiment of this application. The method includes the following steps.

201: A network interface card device obtains upgrade information of an application, where the upgrade information includes a target operator, an operator identifier of the target operator, and an application identifier of the application.

In a possible implementation, a user may trigger an upgrade instruction for an application on a device in which a network interface card is located, so that the device in which the network interface card is located can generate upgrade information of the application. The upgrade information may be a microcode operator package obtained through cross compilation on upgrade content (for example, at least one operator), and the upgrade information is transferred to the network interface card device. The upgrade information may indicate to add some operators to the application or replace an original operator, to update and upgrade the application.

The upgrade content may be an added operator, a replaced operator, or the like.

The target operator may be understood as code corresponding to a function. The function means a mapping rule from function space to function space. For example, the target operator may be a hash operation, a function interception operation, or the like.

The upgrade information may also be referred to as a microcode operator package or a microcode package.

In a possible implementation, the network interface card may obtain the upgrade information of the application from the device in which the network interface card is located. The device in which the network interface card is located may be a computer, a server, or a memory array. For ease of description, the device in which the network interface card is located is referred below to as a host, and correspondingly, a processor of the device in which the network interface card is located is referred below to as a host processor.

In step 201, specifically, the host processor may deliver the upgrade information of the application to the network interface card through a bus. Correspondingly, the network interface card device may receive, through the bus, the upgrade information of the application delivered by the host processor.

A bus used for communication between the host processor and the network interface card may be a PCIe bus, or may be a non-PCIe bus. The non-PCIe bus may be a system management bus (system management bus, SMBus), an inter-integrated circuit (inter-integrated circuit, I2C), a serial peripheral interface (serial peripheral interface, SPI) bus, a universal asynchronous receiver/transmitter (universal asynchronous receiver/transmitter, UART), or the like.

In a possible implementation, the upgrade information may include related information of at least one operator. An example in which the at least one operator includes the target operator is used. The upgrade information may include the target operator, the operator identifier of the target operator, a virtual address of the target operator (optional), and the application identifier of the application.

The operator identifier of the target operator may be a function name or other information (for example, a character string) indicating the operator. The operator identifier may also be referred to as an operator ID, a microcode ID, or the like. The operator identifier may uniquely indicate the target operator.

The application identifier of the application may be an application name or other information (for example, a character string) indicating the application. The application identifier may also be referred to as an application ID. The application identifier may uniquely indicate the application.

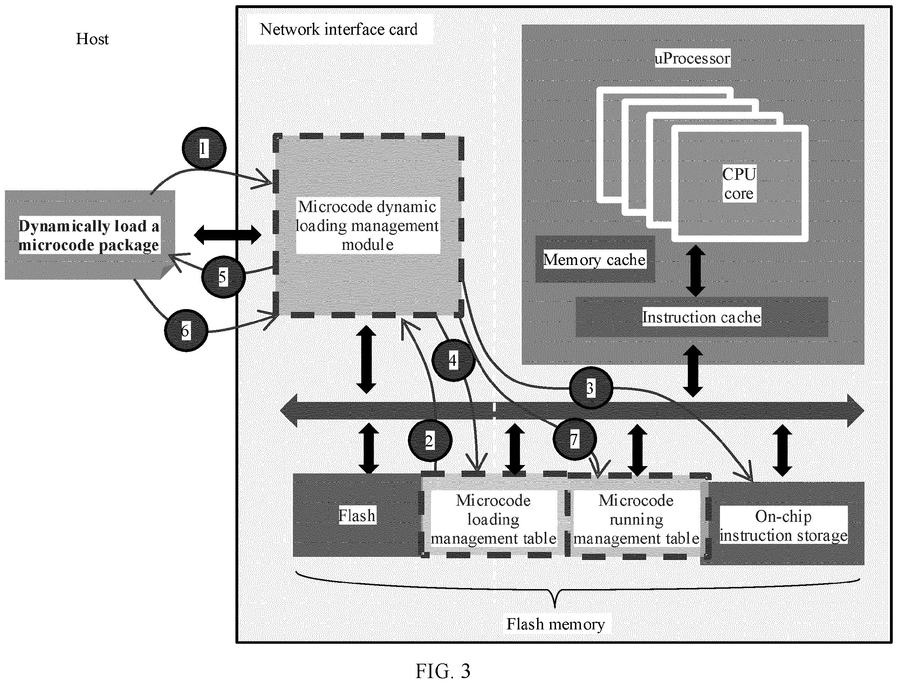

In a possible implementation, the network interface card device may obtain the upgrade information, and store an operator related to the upgrade information. Refer to FIG. 3. A processor of the network interface card device may run a microcode dynamic loading management module. The microcode dynamic loading management module may perform an action related to processing the upgrade information.

In a possible implementation, the upgrade information may further include an identifier of a to-be-replaced operator. Upgrading the application may be replacing or adding an operator of the application. When the operator is replaced, the upgrade information may indicate to replace which operator (the to-be-replaced operator) and replace the operator with which operator (the target operator). In this way, the network interface card device can remove the to-be-replaced operator from an original storage location and store the target operator.

202: The network interface card device obtains a physical address allocated to the target operator, where the physical address is an address of storage space on the network interface card device.

In a possible implementation, the storage space is a cache (cache). The cache may include a data cache and an instruction cache. The storage space herein may be the data cache.

In a possible implementation, the storage space is a flash memory (flash). Because the flash memory is a non-volatile memory, data is not lost even if there is a power-off. After the network interface card device is restarted, an operator may be loaded from the flash memory to an internal memory again for running.

The storage space is idle storage space on the network interface card device. Idle may be understood as that there is no data allocated to and stored in the storage space. In other words, the storage space may be idle storage space in a cache of the network interface card device, or the storage space may be idle storage space in a flash memory of the network interface card device.

In a possible implementation, the upgrade information further includes the virtual address corresponding to the target operator. The network interface card device may map the virtual address to a corresponding physical address based on the virtual address.

The virtual address may be an address (for example, an address in a dynamic random access memory (dynamic random access memory, DRAM)) allocated by a host to the target operator. To store the target operator in storage space on the network interface card device, the network interface card device needs to map the virtual address to a physical address of the storage space on the network interface card device.

In this embodiment of this application, the network interface card device may allocate idle instruction space (namely, an address of the storage space) to the target operator, adjust a hook address (that is, map the virtual address to the corresponding physical address), and write the target operator to the allocated instruction space. The network interface card device may allocate the idle instruction space based on a real-time status of the instruction space and a size requirement of the target operator.

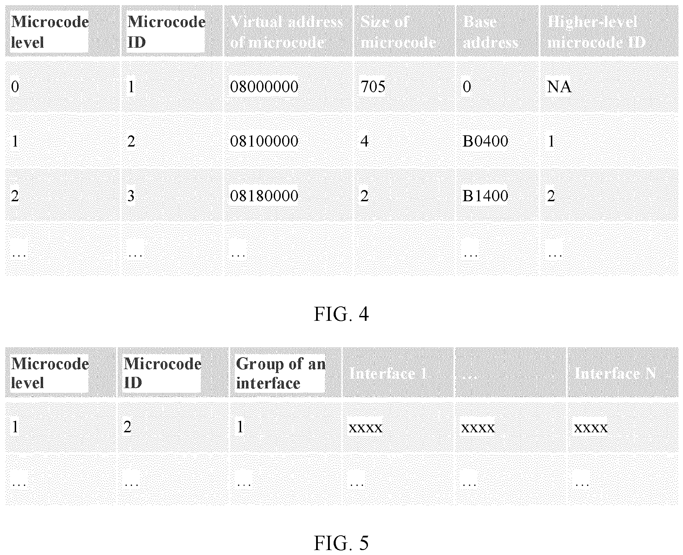

To learn about storage resources in the network interface card device that are idle, the network interface card device may maintain a table (the table may be referred to as a microcode loading management table, or referred to as a second mapping relationship, and for details, refer to FIG. 3 and FIG. 4). The following describes the second mapping relationship.

In a possible implementation, the second mapping relationship may record related information (for example, including an operator identifier, a virtual address (optional), and an operator size) of a current operator that is of each application (including the application) and to which a physical address has been allocated.

In a possible implementation, an operator may be stored based on a hook level relationship of the operator. The hook level herein may be understood as an importance degree of the target operator. The importance degree may be an operator function, an operator size, or an operator hook relationship. For example, a first hook level may indicate that the target operator may be hooked by an operator of a second hook level and that the target operator may hook an operator of a third hook level. The second hook level is different from the third hook level. In a possible implementation, the second hook level is lower than the first hook level, and the third hook level is higher than the first hook level. When a physical address is allocated to an operator, different areas are allocated to operators of different hook levels. An operator of a lower hook level can hook, based on hook level classification, an operator of a higher hook level. This can reduce a quantity of operators.

The network interface card device may pre-allocate different storage space (namely, the subspace described above) to operators of different importance degrees (for example, different functions or different sizes).

The storage space may include first subspace allocated to an operator of the first hook level. The physical address is an address of the first subspace. The storage space may further include second subspace allocated to an operator of a second hook level. The first subspace is used to store the operator of the first hook level. The second subspace is used to store the operator of the second hook level.

In a possible implementation, the storage space is the first subspace that is on the network interface card device and that is allocated to the operator of the first hook level. The first subspace is used to store the operator of the first hook level.

When a physical address is allocated to an operator, different storage areas are allocated to operators of different hook levels. The first subspace is used to store the operator of the first hook level, but is not used to store an operator of another hook level.

In a possible implementation, the upgrade information further includes the first hook level of the target operator. In other words, a hook level of an operator may be included in the upgrade information.

In a possible implementation, the second mapping relationship may include a plurality of hook levels, subspace allocated to each hook level, and information about an operator stored in each subspace. The information about the operator may include a virtual address of the operator and an identifier of the operator.

The second mapping relationship may record information about an allocated operator in storage space allocated to each hook level. In this way, when an address is allocated to the target operator, a hook level to which the target operator belongs may be first determined (for example, the target operator belongs to the first hook level).

In a possible implementation, the second mapping relationship may include a plurality of hook levels, subspace allocated to each hook level, and information about an operator stored in each subspace. The information about the operator may include a virtual address of the operator and an identifier of the operator.

The second mapping relationship may record information about an allocated operator in storage space allocated to each hook level. In this way, when an address is allocated to the target operator, a hook level to which the target operator belongs may be first determined (for example, the target operator belongs to the first hook level).

After it is determined that the hook level to which the target operator belongs is the first hook level, space (the first subspace, where the first subspace is used to store the operator of the first hook level) allocated to the first hook level may be determined based on the second mapping relationship. In other words, the first subspace allocated to the first hook level is determined from the second mapping relationship based on the first hook level and the second mapping relationship, so that the physical address allocated to the target operator can be obtained from the first subspace.

It should be understood that the second mapping relationship may be stored in the cache or the flash memory.

It should be understood that the second mapping relationship may be stored as information in a form of, for example, a table or an array. A data form of the second mapping relationship is not limited herein.

In this embodiment of this application, the second mapping relationship may be updated based on information about the target operator. For example, a mapping relationship between information such as the operator identifier of the target operator, the first hook level, and the virtual address of the target operator may be constructed, and the mapping relationship is added to the second mapping relationship, to update the second mapping relationship.

203: The network interface card device stores the target operator in the storage space corresponding to the physical address, and constructs a first mapping relationship based on the operator identifier, the application identifier, and the physical address, where the first mapping relationship indicates that there is a mapping relationship between at least two of the operator identifier, the application identifier, and the physical address, and the first mapping relationship is used as routing information of the target operator when the application is running.

In this embodiment of this application, after the physical address corresponding to the target operator is determined, the target operator may be stored in the storage space corresponding to the physical address. For example, the target operator may be stored in storage space that is of a cache and that corresponds to the physical address, or stored in storage space that is of a flash memory and that corresponds to the physical address.

To enable the network interface card device to hook the target operator subsequently when the application is running, a mapping relationship table (which may be referred to as a microcode running management table or the first mapping relationship in embodiments of this application, as shown in FIG. 3 and FIG. 5) used as the routing information of the target operator needs to be established. The first mapping relationship records an identifier, a physical address (or referred to as an interface address), and the like of each operator of the application. When the application is running, an identifier of an operator that needs to be hooked may be specified in a data packet, so that the network interface card device can determine, based on the identifier of the operator and the first mapping relationship, a physical address stored in the operator, and hook and execute the operator based on the physical address.

In this embodiment of this application, the first mapping relationship may be updated based on related information of the target operator. The first mapping relationship may be used as the routing information when the target operator is subsequently hooked. Specifically, the first mapping relationship may be constructed based on the operator identifier, the first hook level, the application identifier, and the physical address. The first mapping relationship indicates that there is a mapping relationship between the operator identifier, the first hook level, the application identifier, and the physical address.

It should be understood that the first mapping relationship may be stored in the cache or the flash memory.

It should be understood that the first mapping relationship may be stored as information in a form of, for example, a table or an array. A data form of the first mapping relationship is not limited herein.

In a possible implementation, the target operator includes a first operator segment and a second operator segment. The first operator segment and the second operator segment each are a part of the target operator. The first operator segment includes an entry function of the target operator. The storing the target operator in the storage space corresponding to the physical address includes: on a basis that available space in the first subspace is smaller than storage space required for storing the target operator, and the available space in the first subspace is greater than storage space required for storing the first operator segment, storing the first operator segment in the storage space corresponding to the physical address, and transferring the second operator segment to a host, so that the host stores the second operator segment.

When the available storage space in the first subspace is insufficient to store the complete target operator and can store only a part of the target operator, only the part of the target operator may be stored in the first subspace. Then, a remaining part of the operator is stored in the host. The remaining part of the operator stored in the first subspace may include the entry function. In the foregoing manner, the storage space on the network interface card device can be fully utilized.

In a possible implementation, when the application is running, the network interface card device may receive operator hook information sent when the application is running, where the operator hook information includes the application identifier and the operator identifier, and the operator hook information indicates to execute the target operator; obtain the physical address based on the operator hook information and the first mapping relationship; and obtain the target operator based on the physical address.

When the upgraded application actually runs, if the application needs to hook the target operator, information (including the operator identifier and the application identifier) that indicates to hook the target operator may be transferred to the network interface card device. The network interface card device may obtain, based on the first mapping relationship, the physical address at which the target operator is stored, obtain the target operator from the physical address, and execute the target operator.

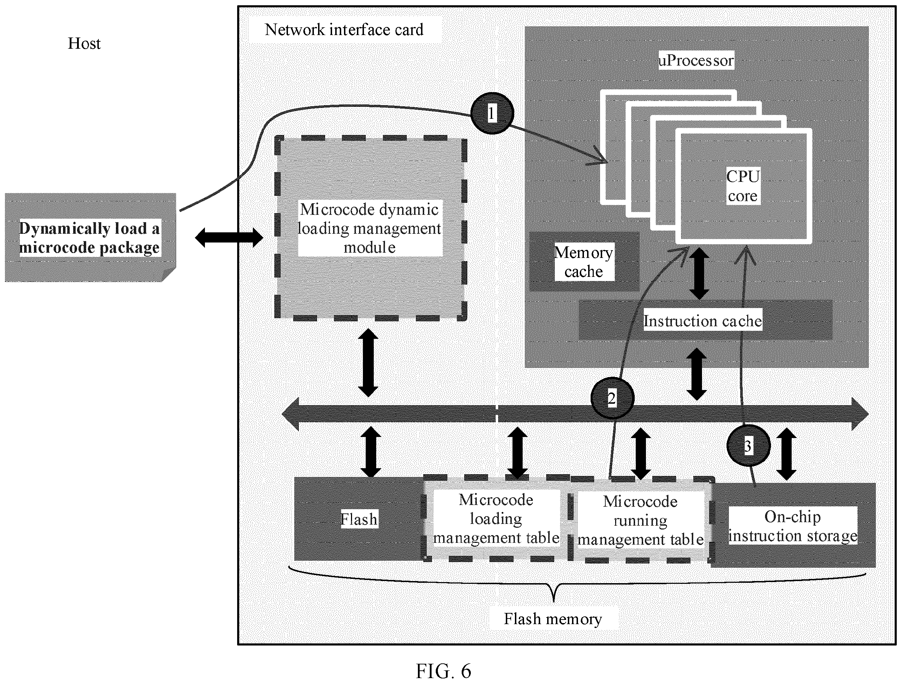

FIG. 6 is a schematic diagram of a data flow during running of an application.

Specifically, in a possible implementation, the operator hook information further indicates to execute a software program. The software program includes a first code segment, a second code segment, and a hook (hook) point located between the first code segment and the second code segment. The hook point indicates whether to hook the target operator. The operator hook information specifically indicates to hook the target operator after the first code segment is executed. The method further includes: executing the first code segment, the target operator, and the second code segment based on the operator hook information.

The operator hook information may indicate to run a program in the application. The program may be preconfigured with a hook point. Whether to hook the target operator may be indicated at the hook point. The application may transfer, to the network interface card device, information (which may be carried in a data packet or a QPC) about the target operator that needs to be hooked at the hook point, so that the network interface card device can hook and execute the target operator at the hook point when running the program.

In other words, when performing execution at the hook point, the network interface card device needs to determine whether the data packet needs to be processed by using an offloaded operator (for example, the target operator). Optionally, an address of offloaded code in isolation space in a smart memory cache (smart memory cache) may be searched for based on a handler table (handler table), data required for executing the data packet is searched for based on a context table, and the data packet is processed according to an offloading instruction, where the instruction includes but is not limited to matching and execution logic of the data packet.

It should be understood that the foregoing application upgrade process may include execution of a data part and execution of a control part. The data part is used to obtain the operator, store the operator, and the like. The control part is used to construct the first mapping relationship, the second mapping relationship, and the like. The network interface card may include a first processor unit and a second processor unit. The first processor unit is configured to implement a data processing function, and the second processor unit is configured to implement a control processing function. The processor of the network interface card may be a single-core processor or a multi-core processor. The first processor unit and the second processor unit may be two single-core processors, or the first processor unit and the second processor unit are two processor cores of a same multi-core processor.

An embodiment of this application provides an application upgrade method. The method is applied to a network interface card device. The method includes: obtaining upgrade information of an application, where the upgrade information includes a target operator, an operator identifier of the target operator, and an application identifier of the application; obtaining a physical address allocated to the target operator, where the physical address is an address of storage space on the network interface card device; and storing the target operator in the storage space corresponding to the physical address, and constructing a first mapping relationship based on the operator identifier, the application identifier, and the physical address, where the first mapping relationship indicates that there is a mapping relationship between the operator identifier, the application identifier, and the physical address, and the first mapping relationship is used as routing information of the target operator when the application is running. In an existing implementation, when an application on a network interface card is upgraded, to add an operator to code, the operator needs to be written at an insertion location of the operator. The entire application is affected when the operator is inserted (for example, when an operator A and an operator B are inserted, when the operator A is inserted but the operator B is not inserted, an error occurs in running of the application). Therefore, service communication of a web page needs to be disabled (that is, a data packet is not processed), the upgraded application that has been inserted with the operator is written to the network interface card, and the network interface card is restarted to take effect. However, in this embodiment, when an application is upgraded, the entire application is not replaced, only an upgraded operator is stored, and routing information is constructed for the upgraded operator. The target operator is not inserted into a location of the application, and a working process of other code of the application is not affected. When the application is running, only whether to hook the target operator needs to be specified in the data packet, a storage location of the target segment may be routed based on the first mapping relationship, and the target operator is hooked. In this way, the application on the network interface card can be upgraded without a need to restart the network interface card. Because the network interface card does not need to be restarted, a service link cannot be interrupted. Therefore, in the technical solutions provided in this embodiment, the application on the network interface card can be upgraded without interrupting a service communication link. This can reduce impact of upgrade of the application on the network interface card on a service, accelerate application computing and transmission, and improve performance of an entire device.

In addition, different application identifiers may be configured for different applications. Due to different application identifiers, isolation between the applications can be ensured (when data packets are processed, each data packet may hook an operator of an application of the data packet based on an indication of an operator identifier). In other words, a plurality of types of applications including a plurality of operators can be simultaneously offloaded and isolated from each other without affecting each other.

In addition, in this embodiment, the data packet does not need to be modified, and a format of the data packet of a data layer does not need to be modified. Only a delivery matching rule of a control channel needs to be modified to distinguish different data packets. Scalability is higher.

In addition, different application identifiers may be configured for different applications, and applications are upgraded in a manner that is the same as the application upgrade method shown in FIG. 2. Due to different application identifiers, isolation between the applications can be ensured (when data packets are processed, each data packet may hook an operator of an application of the data packet based on an indication of an operator identifier). In other words, a plurality of types of applications including a plurality of operators can be simultaneously offloaded and isolated from each other without affecting each other.

In addition, the operator is offloaded to a flash memory (flash) area of the network interface card without interrupting service traffic of the network interface card, so that online upgrade and selective management of a function of the network interface card can be implemented. In addition, after the network interface card is restarted, the operator may be loaded from the flash memory to an internal memory again for running.

In addition, when a physical address is allocated to an operator, different areas are allocated to operators of different hook levels. An operator of a lower hook level can hook, based on hook level classification, an operator of a higher hook level. This can reduce a quantity of operators.

The foregoing takes the network interface card as an object and describes the method for upgrading an application on the network interface card. However, the application upgrade solution provided in embodiments of this application may be further applied to an Ethernet (Ethernet) interface, a fiber channel (FC) interface, a SAS/SATA interface, redundant arrays of independent disks (redundant arrays of independent disks, RAID), a host bus adapter (host bus adapter, HBA), or an I/O interface card device of a network host (a computing node or a storage node) in another form.

The application upgrade solution provided in embodiments of this application may be further applied to a system-on-a-chip (system-on-a-chip, SoC). The SoC is a technology that integrates a complete system on a single chip and groups all or some necessary electronic circuits. The complete system generally includes a central processing unit (CPU), a memory, a peripheral circuit, and the like.

The following provides a schematic diagram of a system framework of a network interface card device according to an embodiment of this application.

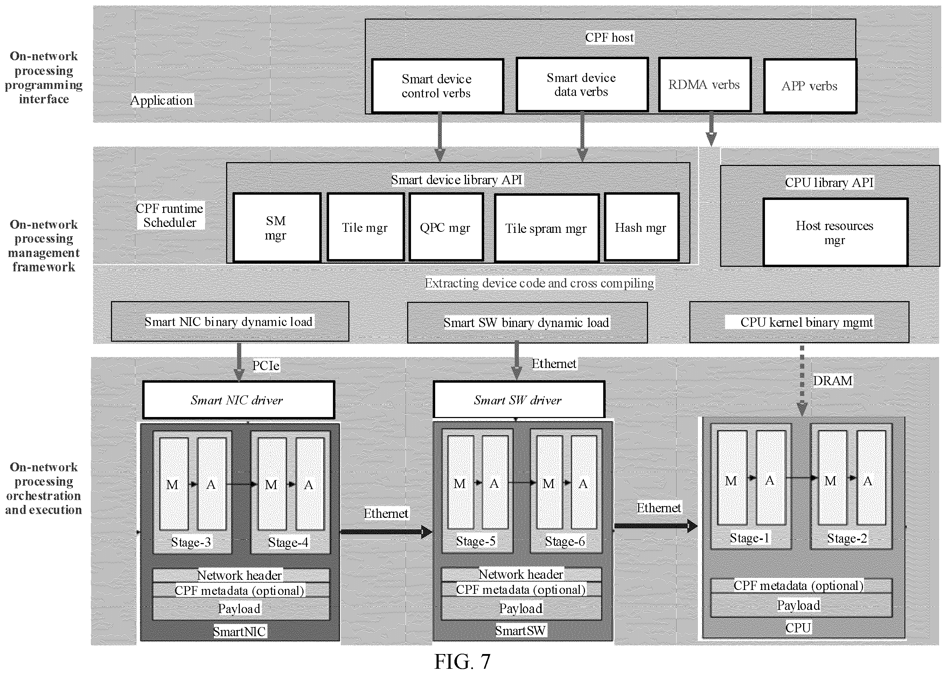

FIG. 7 is a schematic diagram of a framework of on-network processing (online network processing, ONP). ONP is a dynamic programmable acceleration framework. FIG. 7 shows a plurality of scenarios of application offloading acceleration. The scenarios include a dynamic multi-congestion protocol of a network, reading/writing of a stored transaction atom, kvs, collective communication, and discrete data transmission of HPC. These scenarios have different application logic. An objective of ONP is to dynamically support these different application acceleration requirements by using a unified programmable framework. To achieve this objective, ONP provides a unified programmable interface and application logic development process, and then an ONP management component dynamically selects and runs application offloading logic. In addition, ONP supports a self-developed network interface card architecture downwards, and provides a unified programming model upwards.

As shown in FIG. 7, the ONP framework includes an on-network processing programming interface, and an on-network processing management framework and an on-network processing orchestration and execution module are added. The on-network processing programming interface may provide a unified programmable interface of a network interface card, to facilitate user programming. The on-network processing programming interface includes a control channel interface, so that the user can conveniently deliver a control command and offload a microcode operator, and includes a data channel interface, so that the user can conveniently hook the interface to implement data transmission. In addition, there are some customized APP verbs, such as customized acceleration interfaces for KV store and RPC serialization. The on-network processing management framework is a software system framework for real-time offloading scheduling and compilation that abstracts computing, storage, and hardware resources of the network interface card for the user to use, and manages these resources for the user. The operator microcode offloaded by the user is extracted and compiled in the management framework and distributed to the network interface card or another hardware device for execution. On-network processing orchestration and execution is a framework for orchestration and execution of the microcode operator in the network interface card, and provides communication and mutual hook capabilities for different operators.

When an Internet company builds a data center and a computing center, to avoid vendor inlock, the Internet company purchases smart network interface cards from a plurality of companies based on a specific ratio instead of purchasing all network interface cards from a same company. However, most RDMA-based smart network interface cards use congestion control protocols self-developed by device manufacturers. As a result, if hybrid deployment is performed, communication performance is reduced, and even a connectivity problem is caused. A plurality of congestion control mechanisms have different protocol processes and packet formats. How to integrate the protocol processes and the packet formats into a unified RDMA packet processing process, to support interconnection in different scenarios and keep implementing a PFC-free congestion control policy while maintaining interconnection in an integration process is a problem that needs to be resolved based on hybrid deployment. To support scalability and dynamic update of a congestion control mechanism, a technology provided in this patent is used to implement dynamic congestion control DCC, to support a plurality of congestion control mechanisms, such as LDCP, DCQCN, or PCC-LDCP, dynamically configure a congestion mode, and unify programmable congestion control interfaces, for coexistence and dynamic switching of a plurality of congestion control algorithms.

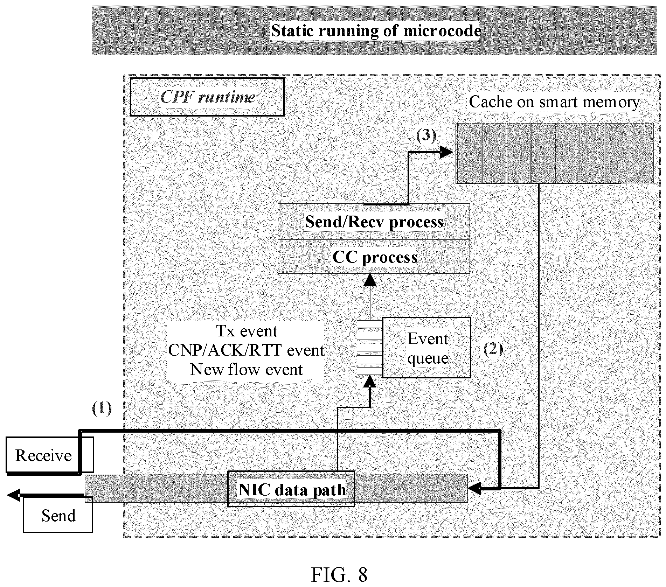

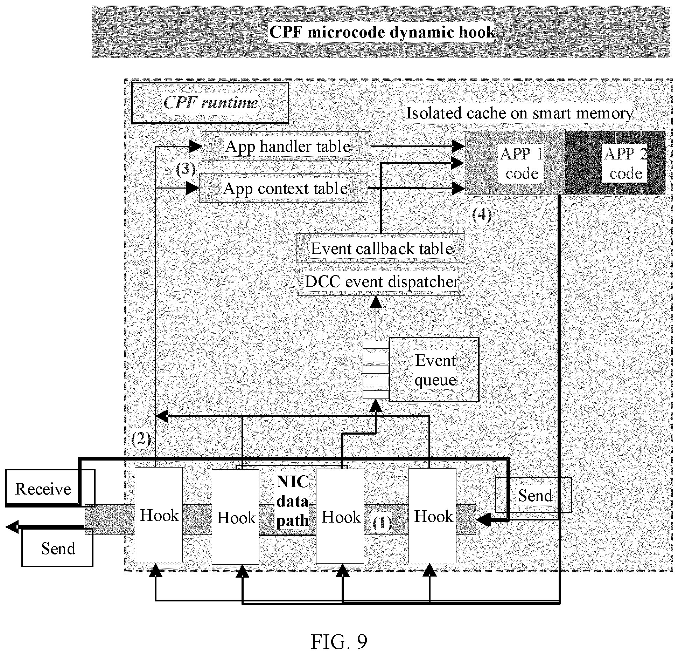

According to FIG. 8 and FIG. 9, a congestion control algorithm running process without using embodiments of this application is shown. As shown in FIG. 8, when microcode runs statically, (1) the microcode receives a data packet such as CNP/ACK/RTT; (2) different processing processes are started based on different events; and (3) microcode in a public smart memory cache is hooked to execute the data packet. In a dynamic congestion control algorithm process using embodiments of this application, a hook point is added to microcode to dynamically hook code of floating address space delivered by an application. When congestion control of microcode is dynamically hooked, (1) a hook point is added to a microcode process; (2) whether a data packet needs to be processed by using offloaded code is determined at the hook point; (3) an address of the offloaded code in isolation space in the smart memory cache is searched for based on a Handler table, and data required for executing the data packet is searched for based on a context table; and (4) the data packet is processed according to an offloading instruction, where the instruction includes but is not limited to matching and execution logic of the data packet.

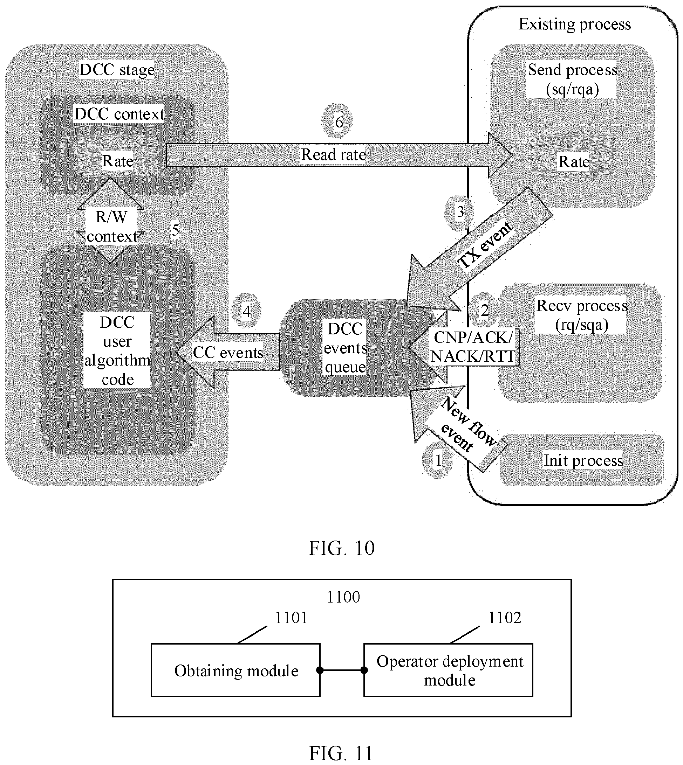

Refer to FIG. 10. A hook point is added to an existing data flow processing process, and a congestion control operator is dynamically offloaded at the hook point. A specific algorithm running process is as follows:
1. In an initialization phase, a new flow event may be generated.
2. In a packet receiving phase, events such as CNP/ACK/NACK/RTT may be generated.
3. In a sending phase, a CC algorithm may be notified after a specific amount of data is sent (TX event).
4. A user CC operator is driven by the events.
5. There is a storage status of 20 B space, and a result is written to a rate.
6. In the sending phase, the rate is read, and data is sent based on the rate.

According to this embodiment of this application, a user can customize a congestion control algorithm, hook an offloading interface, and dynamically deliver an RDMA congestion control algorithm to a network interface card. The congestion control algorithm can be dynamically offloaded without interrupting a service data flow. Benefits of dynamically hook microcode may include the following. 1. Dynamic loading efficiency is higher. 2. Storage resources are isolated, a hit ratio of a cache is provided, and content switching is reduced. 3. An interface is flexibly hooked.

The foregoing describes the method embodiments of this application, and the following describes the apparatus embodiments of this application. For explanations and beneficial effects of related content in the apparatus embodiments, refer to the corresponding method embodiments provided above. Details are not described herein again.

Refer to FIG. 11. An embodiment of this application provides a schematic diagram of a structure of an application upgrade apparatus. The apparatus is used in a network interface card device. The apparatus 1100 may include:
an obtaining module 1101, configured to: obtain upgrade information of an application, where the upgrade information includes a target operator, an operator identifier of the target operator, and an application identifier of the application; and
obtain a physical address allocated to the target operator, where the physical address is an address of storage space on the network interface card device.

For specific descriptions of the obtaining module 1101, refer to descriptions of step 201 and step 202. Details are not described herein again.

An operator deployment module 1102 is configured to: store the target operator in the storage space corresponding to the physical address, and construct a first mapping relationship based on the operator identifier, the application identifier, and the physical address, where the first mapping relationship indicates that there is a mapping relationship between the operator identifier, the application identifier, and the physical address, and the first mapping relationship is used as routing information of the target operator when the application is running.

For specific descriptions of the operator deployment module 1102, refer to descriptions of step 203. Details are not described herein again.

In a possible implementation, the storage space is a cache or a flash memory.

In a possible implementation, the upgrade information further includes a virtual address corresponding to the target operator.

The obtaining module is specifically configured to:
map the virtual address to a corresponding physical address based on the virtual address.

In a possible implementation, the upgrade information further includes a first hook level of the target operator. The first hook level indicates an importance degree of the target operator. The storage space includes first subspace allocated to an operator of the first hook level. The physical address is an address of the first subspace.

In a possible implementation, the storage space further includes second subspace allocated to an operator of a second hook level. The first subspace is used to store the operator of the first hook level. The second subspace is used to store the operator of the second hook level.

In a possible implementation, the obtaining module is specifically configured to:
obtain a second mapping relationship, where the second mapping relationship includes a plurality of hook levels and subspace allocated to each hook level;
determine, from the second mapping relationship based on the first hook level and the second mapping relationship, the first subspace allocated to the first hook level; and
obtain, from the first subspace, the physical address allocated to the target operator.

In a possible implementation, the upgrade information further includes an identifier of a to-be-replaced operator.

The obtaining module is specifically configured to:
determine, based on the identifier of the to-be-replaced operator, a physical address of storage space in which the to-be-replaced operator is stored.

In a possible implementation, the target operator includes a first operator segment and a second operator segment. The first operator segment and the second operator segment each are a part of the target operator. The first operator segment includes an entry function of the target operator.

The operator deployment module is specifically configured to:
on a basis that available space in the first subspace is smaller than storage space required for storing the target operator, and the available space in the first subspace is greater than storage space required for storing the first operator segment, store the first operator segment in the storage space corresponding to the physical address, and transfer the second operator segment to a host, so that the host stores the second operator segment.

In a possible implementation, the operator deployment module is specifically configured to:
construct the first mapping relationship based on the operator identifier, the first hook level, the application identifier, and the physical address, where the first mapping relationship indicates that there is a mapping relationship between the operator identifier, the first hook level, the application identifier, and the physical address.

In a possible implementation, the obtaining module is further configured to:
receive operator hook information sent when the application is running, where the operator hook information includes the application identifier and the operator identifier, and the operator hook information indicates to execute the target operator;
obtain the physical address based on the operator hook information and the first mapping relationship; and
obtain the target operator based on the physical address.

In a possible implementation, the operator hook information further indicates to execute a software program. The software program includes a first code segment, a second code segment, and a hook (hook) point located between the first code segment and the second code segment. The hook point indicates whether to hook the target operator. The operator hook information specifically indicates to hook the target operator after the first code segment is executed.

The apparatus further includes:
a program execution module, configured to execute the first code segment, the target operator, and the second code segment based on the operator hook information.

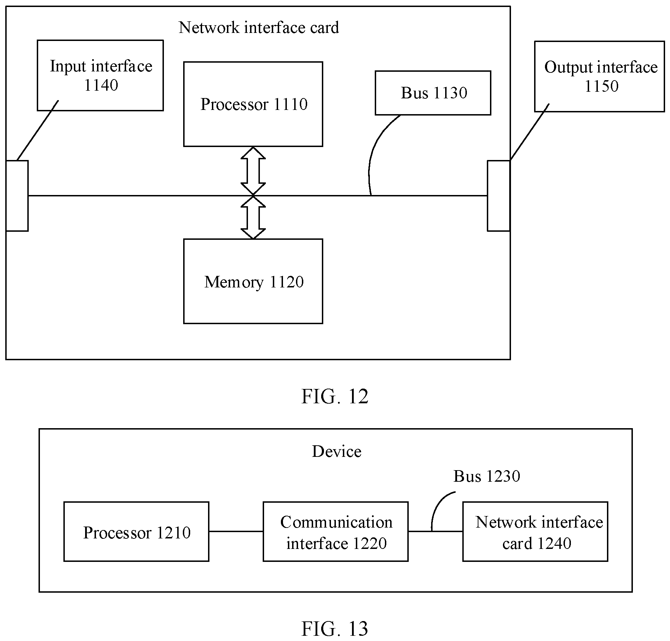

As shown in FIG. 12, an embodiment of this application further provides a network interface card. The network interface card includes a processor 1110, a memory 1120, a bus 1130, an input interface 1140, and an output interface 1150. The processor 1110, the memory 1120, the input interface 1140, and the output interface 1150 are communicatively connected through the bus 1130. The memory 1120 is configured to store instructions. The processor 1110 is configured to execute the instructions stored in the memory 1130. The execution of the instructions stored in the memory 1130 enables the processor 1110 to perform actions performed by the network interface card in the foregoing method embodiments.

An embodiment of this application further provides a chip. The chip includes a processing unit and a communication interface. The processing unit is configured to perform operations performed by the chip device in the foregoing method embodiments. The communication interface is configured to communicate with the outside.

Optionally, the chip may further include a storage unit. The storage unit stores instructions. The processing unit is configured to execute the instructions stored in the storage unit. When the instructions are executed, the processing unit is configured to perform operations performed by the network interface card in the foregoing method embodiments.

An embodiment of this application further provides a computer-readable storage medium. The computer-readable storage medium stores a computer program. When the computer program is executed by a processor, the method performed by the network interface card in the foregoing method embodiments can be implemented.

An embodiment of this application further provides a computer program product including instructions. When the instructions are executed by a computer, the method performed by the network interface card in the foregoing method embodiments can be implemented.

As shown in FIG. 13, an embodiment of this application further provides a device. The device includes a processor 1210, a communication interface 1220, a bus 1230, and a network interface card 1240. The communication interface 1220 is communicatively connected to the network interface card 1240 through the bus 1230. The processor 1210 corresponds to the host processor mentioned in the foregoing embodiments. The network interface card 1240 corresponds to the network interface card in the foregoing embodiments. The server may correspond to the host mentioned in the foregoing embodiments.

Optionally, the bus 1130 may be a PCIe bus, or may be a non-PCIe bus. The non-PCIe bus may be an SMBus, an I2C, an SPI bus, a UART, or the like.

It should be understood that the network interface card in the device in this embodiment of the present invention may correspond to the network interface card shown in FIG. 12 in embodiments of this application, and may correspond to an execution body of the method for upgrading an application on the network interface card in FIG. 2 in embodiments of this application. In addition, the foregoing and other operations and/or functions of the modules in the device are separately intended to implement corresponding processes of the method in FIG. 2. For brevity, details are not described herein again.

It should be understood the network interface card in this embodiment has a processor and a memory. The memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Based on examples rather than limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this specification is intended to include but is not limited to these memories and any memory of another appropriate type.

In addition, it should be noted that the apparatus embodiments described above are merely an example. The units described as separate parts may or may not be physically separate, and parts displayed as units may or may not be physical units, may be located in one place, or may be distributed on a plurality of network units. Some or all of the modules may be selected based on an actual requirement, to achieve objectives of the solutions in embodiments. In addition, in the accompanying drawings of the apparatus embodiments provided in this application, a connection relationship between modules indicates that the modules have a communication connection with each other, and may be specifically implemented as one or more communication buses or signal cables.

Based on the descriptions of the foregoing implementations, a person skilled in the art may clearly understand that this application may be implemented by software in addition to necessary commodity hardware, or certainly may be implemented by dedicated hardware, including a dedicated integrated circuit, a dedicated CPU, a dedicated memory, a dedicated component, and the like. Generally, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, for example, a training device or a data center in which one or more usable media are integrated. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

## Claims

1. An application upgrade method, wherein the method is applied to a network interface card device, and the method comprises:
obtaining upgrade information of an application, wherein the upgrade information comprises a target operator, an operator identifier of the target operator, and an application identifier of the application;
obtaining a physical address allocated to the target operator, wherein the physical address is an address of storage space on the network interface card device; and
storing the target operator in the storage space corresponding to the physical address, and constructing a first mapping relationship based on the operator identifier, the application identifier, and the physical address, wherein the first mapping relationship indicates that there is a mapping relationship between the operator identifier, the application identifier, and the physical address, and the first mapping relationship is used as routing information of the target operator when the application is running.

2. The method according to claim 1, wherein the storage space is a cache or a flash memory.

3. The method according to claim 1 or 2, wherein the upgrade information further comprises a virtual address corresponding to the target operator; and
the obtaining a physical address allocated to the target operator comprises:
mapping the virtual address to a corresponding physical address based on the virtual address.

4. The method according to any one of claims 1 to 3, wherein the upgrade information further comprises a first hook level of the target operator, the first hook level indicates an importance degree of the target operator, the storage space comprises first subspace allocated to an operator of the first hook level, and the physical address is an address of the first subspace.

5. The method according to claim 4, wherein the storage space further comprises second subspace allocated to an operator of a second hook level, the first subspace is used to store the operator of the first hook level, and the second subspace is used to store the operator of the second hook level.

6. The method according to claim 4 or 5, wherein the obtaining a physical address allocated to the target operator comprises:
obtaining a second mapping relationship, wherein the second mapping relationship comprises a plurality of hook levels and subspace allocated to each hook level;
determining, from the second mapping relationship based on the first hook level and the second mapping relationship, the first subspace allocated to the first hook level; and
obtaining, from the first subspace, the physical address allocated to the target operator.

7. The method according to any one of claims 1 to 6, wherein the upgrade information further comprises an identifier of a to-be-replaced operator; and
the obtaining a physical address allocated to the target operator comprises:
determining, based on the identifier of the to-be-replaced operator, a physical address of storage space in which the to-be-replaced operator is stored.

8. The method according to any one of claims 4 to 7, wherein the target operator comprises a first operator segment and a second operator segment, the first operator segment and the second operator segment each are a part of the target operator, and the first operator segment comprises an entry function of the target operator; and
the storing the target operator in the storage space corresponding to the physical address comprises:
on a basis that available space in the first subspace is smaller than storage space required for storing the target operator, and the available space in the first subspace is greater than storage space required for storing the first operator segment, storing the first operator segment in the storage space corresponding to the physical address, and transferring the second operator segment to a host, so that the host stores the second operator segment.

9. The method according to any one of claims 4 to 8, wherein the constructing a first mapping relationship based on the operator identifier, the application identifier, and the physical address comprises:
constructing the first mapping relationship based on the operator identifier, the first hook level, the application identifier, and the physical address, wherein the first mapping relationship indicates that there is a mapping relationship between the operator identifier, the first hook level, the application identifier, and the physical address.

10. The method according to any one of claims 1 to 9, wherein after the constructing a first mapping relationship, the method further comprises:
receiving operator hook information sent when the application is running, wherein the operator hook information comprises the application identifier and the operator identifier, and the operator hook information indicates to execute the target operator;
obtaining the physical address based on the operator hook information and the first mapping relationship; and
obtaining the target operator based on the physical address.

11. The method according to claim 10, wherein the operator hook information further indicates to execute a software program, the software program comprises a first code segment, a second code segment, and a hook hook point located between the first code segment and the second code segment, the hook point indicates whether to hook the target operator, and the operator hook information specifically indicates to hook the target operator after the first code segment is executed; and
the method further comprises:
executing the first code segment, the target operator, and the second code segment based on the operator hook information.

12. An application upgrade apparatus, wherein the apparatus is used in a network interface card device, and the apparatus comprises:
an obtaining module, configured to: obtain upgrade information of an application, wherein the upgrade information comprises a target operator, an operator identifier of the target operator, and an application identifier of the application; and
obtain a physical address allocated to the target operator, wherein the physical address is an address of storage space on the network interface card device; and
an operator deployment module, configured to: store the target operator in the storage space corresponding to the physical address, and construct a first mapping relationship based on the operator identifier, the application identifier, and the physical address, wherein the first mapping relationship indicates that there is a mapping relationship between the operator identifier, the application identifier, and the physical address, and the first mapping relationship is used as routing information of the target operator when the application is running.

13. The apparatus according to claim 12, wherein the storage space is a cache or a flash memory.

14. The apparatus according to claim 12 or 13, wherein the upgrade information further comprises a virtual address corresponding to the target operator; and
the obtaining module is specifically configured to:
map the virtual address to a corresponding physical address based on the virtual address.

15. The apparatus according to any one of claims 12 to 14, wherein the upgrade information further comprises a first hook level of the target operator, the first hook level indicates an importance degree of the target operator, the storage space comprises first subspace allocated to an operator of the first hook level, and the physical address is an address of the first subspace.

16. The apparatus according to claim 15, wherein the storage space further comprises second subspace allocated to an operator of a second hook level, the first subspace is used to store the operator of the first hook level, and the second subspace is used to store the operator of the second hook level.

17. The apparatus according to claim 15 or 16, wherein the obtaining module is specifically configured to:
obtain a second mapping relationship, wherein the second mapping relationship comprises a plurality of hook levels and subspace allocated to each hook level;
determine, from the second mapping relationship based on the first hook level and the second mapping relationship, the first subspace allocated to the first hook level; and
obtain, from the first subspace, the physical address allocated to the target operator.

18. The apparatus according to any one of claims 12 to 17, wherein the upgrade information further comprises an identifier of a to-be-replaced operator; and
the obtaining module is specifically configured to:
determine, based on the identifier of the to-be-replaced operator, a physical address of storage space in which the to-be-replaced operator is stored.

19. The apparatus according to any one of claims 15 to 18, wherein the target operator comprises a first operator segment and a second operator segment, the first operator segment and the second operator segment each are a part of the target operator, and the first operator segment comprises an entry function of the target operator; and
the operator deployment module is specifically configured to:
on a basis that available space in the first subspace is smaller than storage space required for storing the target operator, and the available space in the first subspace is greater than storage space required for storing the first operator segment, store the first operator segment in the storage space corresponding to the physical address, and transfer the second operator segment to a host, so that the host stores the second operator segment.

20. The apparatus according to any one of claims 15 to 19, wherein the operator deployment module is specifically configured to:
construct the first mapping relationship based on the operator identifier, the first hook level, the application identifier, and the physical address, wherein the first mapping relationship indicates that there is a mapping relationship between the operator identifier, the first hook level, the application identifier, and the physical address.

21. The apparatus according to any one of claims 12 to 20, wherein the obtaining module is further configured to:
receive operator hook information sent when the application is running, wherein the operator hook information comprises the application identifier and the operator identifier, and the operator hook information indicates to execute the target operator;
obtain the physical address based on the operator hook information and the first mapping relationship; and
obtain the target operator based on the physical address.

22. The apparatus according to claim 21, wherein the operator hook information further indicates to execute a software program, the software program comprises a first code segment, a second code segment, and a hook hook point located between the first code segment and the second code segment, the hook point indicates whether to hook the target operator, and the operator hook information specifically indicates to hook the target operator after the first code segment is executed; and
the apparatus further comprises:
a program execution module, configured to execute the first code segment, the target operator, and the second code segment based on the operator hook information.

23. A network interface card device, comprising a memory and a processor, wherein the memory is configured to store instructions, the processor is configured to execute the instructions stored in the memory, and the execution of the instructions stored in the memory enables the processor to perform operational steps in the method according to any one of claims 1 to 11.

24. A device, wherein the device comprises a network interface card, the network interface card comprises a memory and a processor, the memory is configured to store instructions, the processor is configured to execute the instructions stored in the memory, and the execution of the instructions stored in the memory enables the processor to perform operational steps in the method according to any one of claims 1 to 11.

25. A computer-readable storage medium, comprising computer-readable instructions, wherein when the computer-readable instructions are run on a computer device, the computer device is enabled to perform the method according to any one of claims 1 to 11.

26. A computer program product, comprising computer-readable instructions, wherein when the computer-readable instructions are run on a computer device, the computer device is enabled to perform the method according to any one of claims 1 to 11.
